# EUROPEAN PATENT APPLICATION

(11) **EP 4 851 895 A2**
(43) Date of publication of application: **09.12.2026**
(21) Application number: 26211332.7
(22) Date of filing: 19.09.2023
(51) Int. Cl.: G06Q 10/30

(54) **COMPUTER-IMPLEMENTED METHOD AND SYSTEM FOR GENERATING, USING AND TRACKING INFORMATION-PROVIDING LABELS, COMPUTER PROGRAM PRODUCTS, AND STORAGE MEDIUM RELATED THERETO**

(62) Document number(s) of the earlier application(s) in accordance with Art. 76 EPC: 23198365.1 / 4 528 619
(71) Applicant: Buyerdock Ltd, Colchester, Essex, CO3 3AD (GB)
(72) Inventor: Sparkes, Jonathan, Colchester, CO5 7BD (GB); Dixie, Kevin, Herts, AL6 0NH (GB)
(74) Representative: Neves, Ana

(57) **Abstract**

The present invention concerns a computer-implemented method and system (200) for generating, using and tracking a label (53) on a product (50) and/or on a product packaging. Such label (53) carries information that can be mandatory and also can be non-mandatory. The system (200) according to the invention is configured to perform a computer-implemented method, which system includes: a first computational unit (10) comprising a first user interface (11), a second computational unit (20) comprising a second database (24), remote data sources (16) which provide data to the second computational unit (20), a third computational unit (30) comprising a second user interface (12), a reading and displaying device (40) in a next life receptacle (42), configured to read label (53) and provide the second user with a unique confirmation code sent to second computational unit (20), which then feedbacks a message to second user on their personal carbon footprint.

## Description

### TECHNICAL FIELD OF THE INVENTION

The present invention is related to the field of automated solutions delivering mandatory information with a view to law compliance and delivering consumer engagement information to be displayed on a specific product and/or on its packaging, by means of a computer-implemented method and system. In particular, such information can be related to the product's content with a view to consumer's health, to recycling of packaging, and to a next life of a product or its packaging with a view to circular economy.

The present invention concerns a computer-implemented method and system for providing consumers with mandatory and/or non-mandatory information related to a specific product, wherein such information, when accessed via a machine-readable code provided to a user, can be future-proof information.

### BACKGROUND OF THE INVENTION

Presently, in a world that is threatened by the huge levels of pollution and lack of sustainable management of resources, more and more economic activities all over the world shall qualify as contributing substantially to the transition to a circular economy, including waste prevention, through repurpose, re-use or refill, and recycling.

Additionally, in many countries in Europe today, single consumer products require, by law, additional information on packaging, or information concerning possible allergenic content of a product. Retailers cannot accept non-compliant products and the fines are substantial for those selling without compliance.

Moreover, many manufacturers or even retailers/importers, might decide to inform their customers further on the product footprint, for example, or about the recyclability of a certain packaging as well as the degree of recycling materials included in a product or its packaging. This could be non-mandatory information.

Depending on the size of the product, it may just need a code, for example, a two-dimensional barcode giving access, for example, to a correct recycling logo related to the packaging materials included in the product or to allergenic information, or even to a story about how low the carbon footprint of that packaging is. In other cases, also the logos and/or signs or wordings must be printed directly on the product.

There's a wide variety of products and their packaging to which such information applies or can be applied. Also, law articles and regulations differ from country to country and even within a country law articles change, or are updated, and those market players, for example, retailers, who must comply with it, need to be up to date at a permanent basis in order to comply with the law.

For example, in France, according to Article 17 of the AGEC ("Anti-Waste for a Circular Economy" Law), which is a French law passed in 2020 that aims to fight against waste and promote a circular economy in France. This law aims to limit waste in order to preserve biodiversity and natural resources. Being in force since October 2022, it states that all household products must bear the so-called Triman logo and sorting instructions for each packaging element.

Presently, self-serve platforms are available, which platforms only provide details for specific logos, for example, the French logos, to print on packaging and without including any other regulations or consumer information.

Another example, also in France, is Article 13 of the AGEC law, in force since January 2023, which article states that all products sold in France need to comply with it, that is, with the French Circular Economy Law. This is a hugely complex and even confusing regulation which can be delivered digitally by a code, for example, a two-dimensional barcode. Said article defines a series of environmental characteristics that require disclosure depending on the product type. Characteristics for disclosure include attributes such as presence and amount of recycled content, recyclability, presence of hazardous substances, and traceability, amongst many others. In this case, for example, not providing this information may risk the product being dropped form retail in the French market, adding up heavy fines thereon.

Also here, there are presently no options available to automatically comply with this law.

As another example, other products labelling are regulated by European Law concerning full ingredients, allergens and nutrition, which information must be placed on the product, for example, on wine bottles, next to the information related to the disposal or recycling of the packaging materials. There are platforms presently available to assist in providing information related to nutrition and allergens but not concerning recycling or other consumer-directed information.

### SUMMARY OF THE INVENTION

The present invention refers to a computer-implemented method and related system for generating, using and tracking a label on a product and/or on a product packaging. Such label carries information that can be mandatory but also can be non-mandatory. The information carried on the label or accessed through the label is originated by the manufacturer or the market player responsible for the product in the market and is destinated to the product consumer, either to inform the consumer about any subjects the manufacturer, for example, wishes to provide or is obliged to provide to their customers, or to instruct the consumer on how to dispose of the product packaging or other materials. Said label can contain logos, machine-readable codes, for example, a QR-code, and RFID (Radio Frequency Identification) code and/or wording or signs. Said information-carrying, or access-providing, label is intended to assure, as much as possible, that the end life of the product and/or packaging carrying it, will go to the right recycle bin in the end of product's last life, or to a next life, ensuring that the so-called circular economy is completed, and thus the waste reduced.

In a preferred embodiment of a first aspect, the present invention refers to a computer implemented method comprising the following essential steps: a) reception of a specific product-related data originated in a first computational unit, by a second computational unit, b) execution of a first set of sequential and logical instructions trained model, including searching on remote data sources, in order to complete the data related to product, c) sending complete data requesting for confirmation by a first user, d) confirmation done and/or completed/corrected by the first user, e) execution of a second set of sequential and logical instructions retrieving mandatory information according to legislation applicable to the specific product, f) creation of a digital asset related to that product, g) display of such digital asset on a first user interface, enabling first user to print a label, h) updating of a database by experts, i) sending of an alert message to the first computational unit prompting to notify a user of the updated mandatory information, j) sending of a notification to the first user, k) creating an information request over a specific product by a second user, l) sending the information request created to the second computational unit, m) processing of the information related to the product, by the second computational unit, n) providing the information requested to second user, o) taking an action by second user based on the information received related to the product, p) when second user's action is to disposing of the products materials or to handing over the product or product packaging materials, reading of one or more labels on the product and/or product packaging and delivering a unique confirmation code, q) insertion by second user of the unique confirmation code in the computer program application, r) sending the unique confirmation code to the second computational unit, s) execution of a third set of sequential and logical instructions to determine a score for the action of disposal and/or the action of handing over product or product materials performed by second user, t) sending to third computational unit of a feedback message informing second user about a score on their personal carbon footprint. The computer-implemented method of the first aspect of the present invention can also comprise a step u) of reading the machine-readable code on said label on product or its packaging materials, and also to assign a ranking on the product or its packaging materials quality for disposal by a third user on a fourth computational unit; and a step (v) of sending the information read on label to the second computational unit.

In a second aspect, the present invention refers to a system configured to perform the steps of the computer-implemented method according to the first aspect, which system includes: a first computational unit, a second computational unit, a third computational unit, a fourth computational unit, a reading and displaying device, among other elements which will be discussed in detail hereinafter.

In a third aspect, the present invention refers to a computer program product comprising a first set of sequential and logical instructions which, when executed by a computer, can carry out steps of the computer-implemented method according to the first aspect.

In a fourth aspect, the present invention refers to a computer program product comprising a second set of sequential and logical instructions which, when executed by a computer, can carry out steps of the computer-implemented method according to the first aspect.

In a fifth aspect, the present invention refers to a computer program product comprising a computer program application which, when executed by a computer, can carry out steps of the computer-implemented method according to the first aspect.

In a sixth aspect, the present invention refers to a computer program product comprising a third set of sequential and logical instructions which, when executed by a computer, can carry out steps of the computer-implemented method according to the first aspect.

In a seventh aspect the present invention refers to a computer readable storage medium comprising the installation of any of the computer programme products as defined in the third, fourth, fifth or sixth aspects of the present invention.

### TECHNICAL PROBLEM

Complying with a circular economy presents a complex but essential challenge for retailers and other market players. A circular economy is an economic model designed to minimize waste and maximize the longevity of resources through the continuous reuse, repair, refurbishment, and recycling of products and materials. This shift contrasts with the traditional linear economy, which follows a "take, make, dispose" pattern, leading to resource depletion and environmental degradation. Retailers and other market players face complex needs when striving to comply with a circular economy, many of which are presently more and more within a law framework that must be complied with, otherwise those players face huge fines if not bankrupting. In certain cases, and when it comes to packaging materials, manufacturers are forced to rethink their product design, assess lifecycle of products or even implement reverse logistics. All those changes pose a huge challenge to manufacturers or retailers on itself, forcing them to have resources also to keep up to date with all upcoming law and regulations which is often extremely demanding and making all the needed transformations very expensive and cumbersome to the business.

In particular, recycling logos to be provided on the packaging of products or even on the product itself may differ from country to country, which creates an added difficulty to those manufacturers or retailers who place their products on different countries in Europe. Currently, there are platforms providing market players with the mandatory information to be provided on their products, operating per country. For example, platform "Citeo" in France or platform "Conai" in Italy, which is providing only details for the Italian logos and does not include other regulations or consumer information.

In order to contour such difficulties, market players may opt for hiring a regulatory specialist to get them up to date with all legislation and regulations applicable to their products, but this solution will cost high amounts of money and might require one specialist per country law and per product as well.

Moreover, when the logos and/or the information included on a label displayed on a product or product packaging does not contain a machine-readable code, that information might go out of date even during the life of the product concerned.

Patent Application WO 2018/089777 A2 published on 10 November 2016, by ECO Culture Manufacturing Corp (USA) discloses a garment lifecycle tracking system and method, using an RFID device to retrieve life cycle data about the garment. The RFID device may be scanned by an interactive device such as a mobile phone and the RFID device may be used to retrieve data from a database. Life cycle data may include data of manufacture, former locations of purchase, date of return of garment, and the like. A customer may track a garment after returning it to see when and where the garment is subsequently purchased.

This invention relates only to garments and is not providing for mandatory information or other information that may be needed or wished to be placed and used by users.

Patent N° US 11,625,691 B2, published on 11 April 2023, by Single Green Co. Ltd. (TW), discloses a method for facilitating recycling an object. The object includes a detecting device that detects a condition of the object, and wirelessly sends out the detected condition of the object, so that a dealer shop may receive the detected condition of the object and send the same to a server. The server determines whether the object has worn out based on the detected condition, and sends a message to a mobile device related to a consumer of the object for notifying the consumer that the object has worn out, thereby motivating the consumer to recycle the object.

This invention is directed only to the consumer of an object and to its recycling.

None of the prior art techniques mentioned above was so far able to solve all the technical problems identified above, such as, for example, issuing a label complying with mandatory information in a certain country and also comprising future-proof information including repurpose, reuse/refill and finally recycling of a product, contributing to a complete circular economy.

Therefore, the method and the system of the present invention provide a solution enabling circular economy to be completed for a wide diversity of products, in fact, for as many products as those carrying packaging materials, allergen content, carbon footprint stories, or having the possibility of having a next life, providing in the end a score to a personal carbon footprint of a consumer of said products.

### SOLUTION TO TECHNICAL PROBLEM

The present invention discloses a solution to the technical problems mentioned above by means of a computer-implemented method, a system, and computer program products and respective computer-readable storage medium providing market players, like manufacturers and retailers/importers/exporters, with up-to-date mandatory information, for example, packaging or product materials recycling information, product or products materials next life possibility information, other mandatory information such as allergens, ingredients and nutrition, carbon footprint stories of products, and the like, applicable to each country concerned. Also, the solution of the present invention provides, on the one hand, a first type of user with an easy and thorough way to obtain labels containing mandatory and/or non-mandatory information about products or their materials, and, on the other hand, the solution of the present invention provides a second type of user, that is, potential customers, consumers, or even inspectors, with such information. When the label contains a machine-readable code, that information can be future proof.

The applicant has created an automated solution that makes compliance simple and up to date for all sizes of business and in all different countries they are placed in. The solution of the present invention addresses all consumer business that need to be compliant, circular economy law, climate change and reduce waste issues, able to significantly contribute to a circular economy.

The computer-implemented method and system of the present invention automatically generate the required information, for example, a recycling logo, a QR-code, an RFID code, by simply asking the manufacturer or retailer a few questions on an online computer platform. As an example, the recycling regulations that need to be displayed directly on product or via a machine-readable code, for example, via a QR-code, an RFID code, are provided. When new regulation is introduced by authorities for a certain product registered in the system of the present invention, the information related to that product will be updated and the respective market player, herein referred to as a first user, will be alerted if more information is required from them. When a manufacturer or other market player adds new information or product data on the system of the present invention, it generates an instant application running on a computer at the level of a unique product or item.

This means that manufacturers or other market players can interact directly with their consumers, herein referred to as a second user, in addition to automatically becoming compliant as and when new laws are passed throughout the world.

For example, when manufacturers intend to disclose the sustainability story of their product, which is crucial as consumers are being more proactive in their pursuit of adopting a more sustainable lifestyle, for example by choosing brands that have ethical or environmentally sustainable practices and values, such story might not be able to be printed in a small area on the product or the product packaging. Through a smartphone application provided by the present invention, a consumer is able to read the sustainability story of the product he or she is buying. The same can be said about allergens information, that is, a complete information on all ingredients and possible allergens included in the product can be consulted by the consumer, or the second user, before purchasing the product via their smartphone application.

Also, second user can be informed through the solution provided by the present invention, on how to correctly dispose of a product material after consumption thereof, how to hand over a product or its material for a next life, and, when these actions are correctly performed by the second user, the present invention provides them with a score of their personal carbon footprint or with information on how well they performed, for example.

Additionally, the solution of the present invention can also enable a second user who is an inspector from a national authority checking whether a certain product available on a shelf in a supermarket, for example, is complying with the applicable law or regulations. With a unique identifier code on each product the inspector can cross reference their own database of certified products.

In order to guarantee the circular economy of the product in question, the label placed on the product or on its packaging materials is tracked until the recycle centre, wherein it is read by an appropriate scanner or reader at the recycle centre, the data read by the scanner or reader inserted into a fourth computational unit connected to the second computational unit of the invention wherein an update of the score assigned to a second user who disposed of that product or packaging materials thereof, due to the judgement of a third user of the method and system of the present invention relatively to the compliance of certain criteria by the product or packaging materials thereof disposed.

### ADVANTAGEOUS EFFECTS OF THE INVENTION

The method and the system according to the present invention provide clear advantages to their users, in respect to what prior art offers at the present.

On the one hand, for a first type of user, that is, a manufacturer, a retailer, an importer, there is the advantage that they can at all times be sure that the information about the logos and/or codes, for example, two-dimensional machine-readable codes, to be printed on their products and/or packaging, are up-to-date and according to the type of product and the space available in the packaging. For a first user, or a first type of user, the platform provided by the system according to the invention is a SaaS-type platform, that is, a "Software as a Service" platform, which refers to a cloud computing model in which software applications are provided and accessed over the Internet on a subscription basis. This means that a first user is always able to obtain the output of the present invention, that is, the information in the form of logos and/or codes or even wording, for example, a two-dimensional barcode, like a QR-code, a RFID code, which information complies with the most up-to-date law exigences concerning, for example, recycling of the packaging materials and allergens or other content information in food and drinks-related products. Also non-mandatory information can be provided to the consumer through the method and system according to the invention, whenever the first user provides sufficient data in the platform, that is in the second computational unit, of the invention.

On the other hand, for a second type of user, that is, a consumer, an inspection authority, or someone not responsible for the product concerned, there is the advantage that this person can access all relevant data about the product via, for example, a computer application on their smartphone, herein referred to as the third computational unit, that, through the reading of a code, for example, a two-dimensional code or a QR-code, can access to all that information in a future-proof basis. This means that the database where the information related to that specific product is stored is providing updated information at all times, even after the product is on the market or on a store shelf for a long time.

Whenever a first user adds a product in the system platform according to the invention, by means of a first user interface, they will be able to download a fully compliant future proof code, for example, a two-dimensional barcode, that when scanned by for example, a second user, can open an instant computer program application on their smartphone, showing product and regulatory information.

The technological solution according to the present invention also provides the advantage of tracking the product and/or product materials after consumption or after a first life consumption thereof, such that not only the rate of products and/or product materials that go into a circular economy scheme can be known for the products that are registered in the platform provided by the second computational unit of the system of the present invention, but also users and consumers are stimulated on taking the right actions in what concerns recycling of the product and/or product materials and/or in what concerns handing them over onto a next life. This is done by means of a score assigned to a second user according to their actions directed to a product or product packing materials after a first or a next life of consumption of that product. In this way, tracking a label placed on the product or on its packaging materials, guarantees a circular economy of that same product and, at the same time, complying with the law in the country concerned.

In sum, the present invention helps to cut down waste, by ensuring that more product remains in circulation for longer after its first life, providing next life users the opportunity to use the product. This reduces carbon footprint and virgin material usage.

### BRIEF DESCRIPTION OF THE FIGURES

Preferred embodiments of the present invention will be described with reference to the accompanying figures, which are to be construed as non-limiting the invention scope, which scope is defined by the appended claims, and wherein:
**Figure 1** schematically represents an embodiment of steps a), b), c) and d) of the computer-implemented method and related elements of the system according to the present invention;
**Figure 2** schematically represents an embodiment of steps e), f), and g) of the computer-implemented method and related elements of the system according to the present invention;
**Figure 3** schematically represents an embodiment of steps h), i), and j) of the computer-implemented method and related elements of the system according to the present invention;
**Figure 4** schematically represents an embodiment of steps k), l), m) and n) of the computer-implemented method and related elements of the system according to the present invention;
**Figure 5A** schematically represents an embodiment of steps o), p), q), r), s) and t) of the computer-implemented method and related elements of the system according to the present invention;
**Figure 5B** schematically represents an embodiment of steps u), v), and steps s) and t) represented in Figure 5A, of the computer-implemented method and related elements of the system according to the present invention;
**Figures 6A-6B** schematically represent two embodiments of the system according to the present invention;
**Figure 7** schematically represents an embodiment of the first computational unit of the system according to the present invention;
**Figure 8** schematically represents an embodiment of the second computational unit of the system according to the present invention;
**Figure 9** schematically represents an embodiment of the third computational unit of the system according to the present invention;
**Figure 10** schematically represents an embodiment of a disposal receptacle of the system according to the present invention;
**Figure 11** schematically represents an embodiment of a next-life receptacle of the system according to the present invention;
**Figure 12** schematically represents an embodiment of a reading and displaying device of the system according to the present invention;
**Figure 13** schematically represents an embodiment of a product according to the present invention; and
**Figure 14** schematically represents examples of a label created by the method and system according to the invention.

### DEFINITIONS

As used in this application, the terms "two-dimensional barcode" or "2D barcode", refer to either a QR-code or an iQR-code, which can be considered a type of QR-code, as a skilled person in the art will appreciate.

As used in this application, the term "or" is to be interpreted in an inclusive meaning instead of the exclusive meaning, unless otherwise clearly stated. That is, an expression like "X utilizes A or B" shall be interpreted as including all possible combinations, i.e., "X utilizes A", "X utilizes B", and "X utilizes A and B".

As used in this application, the indefinite article "a", "an", shall be interpreted as including "one" or "one or more", unless otherwise clearly stated.

Throughout this application, the examples provided shall be interpreted as having the purpose to illustrate one or more examples of embodiments of the present invention and shall not be interpreted as preferences, unless otherwise clearly stated.

As used throughout the present application, the terms "comprise/comprises", "comprising", "include/includes", "including" specify the presence of the features, elements, components, steps, and related operations, and do not exclude whatsoever the presence of further features, elements, components, steps, and related operations.

The subject-matter above-described is provided as an illustration of the present invention and shall not be interpreted as limiting it. The terminology used with the purpose of describing specific embodiments according to the present invention, shall not be interpreted as a limitation of the invention.

### GENERAL DESCRIPTION OF THE INVENTION

The present invention is related to a computer-implemented method and related system for the generation, usage and tracking of a label placed on a product and/or product packaging materials, wherein such label contains information and/or contains access to information, by means of symbols, signs, logos, wording and/or a machine-readable code, for example, a two-dimensional code, such as a QR-code. The information contained and/or accessed via said label can be mandatory information in the country where the product is being traded and/or the information can be non-mandatory.

Examples of mandatory information are: logos related to the packaging recycling, logos related to allergen content or other content in the product, signs related to nutritional content of the product, wording placed next to logos, like "Bouteille", meaning "Bottle" in French, or "Raccolta Metallo" meaning "Metal Collection" in Italian, a QR-Code giving access to mandatory information, wherein this can be future-proof information, since when the QR-code is scanned with a smartphone of a user, for example, it will retrieve up-to-date information, which can be, as an example, information related to the disposal of the product materials. Even for a skin cream bottle that is in a user's home for a year, if the bottle bears a QR-code and is registered in the platform of the present invention, the user can scan the QR-code at the moment of the disposal and read where and how to dispose of that bottle, which, could have been changed since the user bought the skin cream one year ago. As for a part of a car engine that is being used in a car for several years, in case it bears a QR-code and is registered in the platform of the invention, the user can be informed, by scan the QR-code, on a nearby garage where to dispose of the part or even to hand it over, or sell it, for a next life of that part. The information accessed via scanning the QR-code is future-proof because it is being permanently updated in the database of the system according to the present invention.

Examples of non-mandatory information are: the carbon footprint story of the product, the fact that such product didn't use child workforce in its production, degree of recyclability, percentage of recycled materials contained in the product, sustainable story, number of times reused, expiry date, batch number, social media links, product recall, stockists sold in, product life journey (fork to field), user manuals, how to use product, safety guides, certifications, frequently asked questions, contact information or the story of the production of a wine. Another example of the label's machine-readable code, for example, a QR-code, or a RFID code, content, which can be either mandatory or non-mandatory, is using it on a building. That would provide the building user/occupier with information about the materials used and how to recycle and replace them. Who to go to and detailed plans of electrical wiring and plumbing are also types of information that could be provided in a machine-readable label. Also the emergency services could get quick access to information about the construction of the building which would assist them in any rescue. Updates on material and its safety within building could be performed and any changes needed alerted to the building owner.

Some information can be mandatory in some countries and non-mandatory in other countries. Or information that is today non-mandatory might turn mandatory in the future in a certain country, and in case this information is accessed via a machine-readable code, for example, a QR-code, then the user can always access it in an up-to-date version.

The technical solution of the present invention serves three types of users, a first type of user, or first user, a second type of user or second user, and a third type of user, or third user. The first user is responsible for placing the label containing or giving access to the mandatory and/or non-mandatory information, which information is directed to the consumer of the product concerned. The second user is the one using the information on the label or accessed via the label placed on the product and/or product packaging materials. Such information informs the consumer about the content of a product, for example, allergens, in order to help the potential consumer to decide to consume or buy the product, and/or, can the information refer to the end of the product life by inform on how to dispose of the materials packaging, for example. It can also inform about a way to a next life of that product. For example, a pair of trousers bearing a label containing a QR-code giving access to addresses of second-hand shops or collection points in order to give the pair of trousers a next life. The second user can also be an inspector from an authority wishing to inspect whether products that are on the market are complying with the law articles or regulations applicable thereto, in this case the second user only checks for the mandatory information, as can be understood by an expert in the field. Finally, there is a third user. This third user is an employee at a recycle centre who can use the present invention via a third user interface at a fourth computational unit in the recycle centre. Via said label placed on the product (or its packaging materials), the third user will identify the unit disposed of, one the one hand, and on the other hand, this third user can easily insert, via said third user interface, a ranking on the quality of the product or its packaging materials to be recycled in the most efficient way possible. For example, the cleanness of the product (or its packaging materials), the correct disposal route, that is, whether second user had disposed of the product (or its packaging materials) in the right disposal receptacle but also at the end of the product's last life. This ranking assigned by the third user to the disposed product (or its packaging materials) will be used to determine a score on a personal carbon footprint of a specific second user.

For this purpose, the present invention describes a computer-implemented method and related system for generating such label containing, on the one hand, information required by the law applicable on the country the product is to be traded, and/or, on the other hand, any other information a manufacturer or a retailer, for example, wish to include in order to inform their customers.

The technical solution of the present invention allows products to go into a circular economy life, whereby not only law is complied with, but also an environmental-friendly user can act in terms of reducing waste and possibly contributing to turn it into new raw-materials. In other words, the present invention provides a solution for the consumption society to recycle, preferably, to re-use or refill and recycle, preferably to repurpose, re-use or refill and recycle.

The present invention method and system will be described in detail with reference to the figures included herein, which figures illustrate embodiments of the invention and are not to be interpreted as limiting the invention. The invention is defined by the claims appended.

### DESCRIPTION OF EMBODIMENTS OF THE INVENTION

In a first aspect, the present invention refers to a computer-implemented method for generating, using and tracking of a label containing or giving access to mandatory and/or non-mandatory information, wherein the label generated is placed on a product and/or a product's packaging, said label can be consulted and/or scanned by a user and/or said label can be scanned or read by a reading and displaying device to track whether the product and/or the product packaging materials have been correctly disposed or given a next life, wherein said computer-implemented method of the first aspect comprises the following steps:
a) reception of data d₀ originated in a first computational unit, by a second computational unit, wherein said data d₀ is related to a product, reception of any non-mandatory information related to said product, and storage of data d₀ and of any non-mandatory information received in a second database of the second computational unit;
b) if data d₀ is not complete, but comprises sufficient data dₛ, for example, if data d₀ only comprises a GTIN (Global Trade Item Number) of said product, second computational unit executes a first set of sequential and logical instructions trained model, trained to retrieve the missing data d₀ from remote data sources, wherein the first set of sequential and logical instructions trained model uses input data related to the existent data d₀ of the product identified by the sufficient data dₛ, and which output delivers the most adequate remote data source, wherefrom the first set of sequential and logical instructions trained model completes the missing data d₀ of said product, wherein the training of the first set of sequential and logical instructions trained model is carried out in the following step b0):
   b0) searching on remote data sources for data d₀ related to data dₛ of product, performing data cleaning, data weighting, data ranking and iterating data comparison and accuracy, delivering as an output a ranking of remote data sources for providing data d₀ for said product;
c) second computational unit sends to the first computational unit the complete data d₀ and requests for confirmation whether all data d₀ is correct;
d) confirmation is done by a first user via a first user interface of a first computational unit;
e) after confirmation is done or if data d₀ received in step a) is complete, second computational unit executes a second set of sequential and logical instructions which retrieves mandatory information according to legislation applicable to said product from the second database of second computational unit, and retrieves any non-mandatory information registered in the second database related to said product;
f) creation, by the second computational unit, through the second set of sequential and logical instructions, of a digital asset in an electronic format, wherein such digital asset is related to said product, and it will be converted into a label to be placed on said product and/or on the packaging materials thereof;
g) display of the digital asset on first user interface, wherein digital asset is configured for the first user to download it as a label (53) in a digital format;
h) updating of the second database, by experts, of second computational unit with new mandatory information related to said product;
i) sending, by the second computational unit, of an alert message to the first computational unit prompting to notify a first user of the updated mandatory information;
j) sending of a notification to the first user, via first user interface, by the first computational unit whenever there's the need of data d₀ to be completed, amended and/or validated by the first user;
k) creating an information request over product, by a second user, wherein said creation is carried out by at least one of the following:
   k1) scanning of a machine-readable code, for example, a QR-code or an RFID code, on the label of said product, by using a third computational unit, for example, the smartphone of second user;
   k2) opening, by the second user, of a computer program application, that is, for example, an App on the smartphone of second user, on a second user interface of the third computational unit, and:
      k21) scanning, by second user with the third computational unit, of a machine-readable code on the label of said product; or
      k22) search said product on the computer program application and tap a sending command on second user's interface;
l) sending of the information request created in step k) and related to said product, by the third computational unit, to the second computational unit;
m) processing of the information related to said product, by the second computational unit which executes the second set of sequential and logical instructions, wherein said processing includes the identification and retrieval of the information requested;
n) providing, by the second computational unit, the information requested concerning the product chosen by second user, to the third computational unit which on its turn displays the information on the second user interface;
o) second user takes an action based on the information received on the second user interface related to said product; wherein such action is one or more of the following:
   - second user decides to buy the product;
   - second user decides to consume the product because it is harmless to second user's health, or it is harmless to the environment;
   - second user correctly or incorrectly disposes of the materials comprised in the product in one or more disposal receptacles after consumption thereof;
   - second user correctly or incorrectly hands-over product and/or product packaging materials into one or more next-life receptacles, after consumption of the first life or a previous life of product;
   - second user decides the product is providing one or more mandatory information applicable thereto, in which case, second user can be, for example, an inspector from an authority in charge of inspection that product's information when on the market;
   - second user decides the product is not providing one or more mandatory information applicable thereto, in which case second user can be, for example, an inspector from an authority;

   p) when second user's action is to dispose of the product materials or to hand-over product and/or product packaging materials, one or more reading and displaying devices included in one or more disposal receptacles or in one or more next-life receptacles, read one or more labels and delivers a unique confirmation code on a device screen, wherein the unique confirmation code relates uniquely to that product unit and also it relates uniquely to the disposal receptacle or next-life receptacle which comprises it;
   q) second user then inserts the unique confirmation code into the computer program application on second user interface of the third computational unit;
   r) the third computational unit sends the unique confirmation code to second computational unit;
   s) second computational unit executes a third set of sequential and logical instructions to determine a score for the action of disposal and/or the action of handing-over product performed by second user; wherein said score determination includes processing carbon footprint data of product supplied by the first user and at least one of the following criteria:
      - the correctness or incorrectness of the action performed by second user in terms of type of disposal receptacle or next-life receptacle into which second user disposed of product;

      - a distance between the point of sale of that specific product and the disposal or handing over to next life location; wherein such distance is determined for example, by means of geolocation;
   t) second computational unit sends to third computational unit, that is, for example, the second user's smartphone, a feedback message informing the second user about the score on their personal carbon footprint determined in the previous step;
   wherein steps h) through j) occur in parallel with, before or after, any other steps of the method; and step b0) occurs before and/or during step b).

In preferred embodiments of the first aspect of the invention, the method comprises the following additional steps:
u) when product and/or product's packaging materials arrive at a recycle centre, a third user reads the machine-readable code on label by means of a machine-readable code reader, which reading is sent in a wired or wireless way to a fourth computational unit, the third user selects a ranking of the composition of the product and/or product 's packaging material, from the group consisting of poor, average or good, in order to score the product and/or product's packaging material based on recyclability and inserts data into a third user interface of the fourth computational unit;
v) the fourth computational unit sends the information read on label to the second computational unit;
wherein after step v) step s) is performed again, including additionally at least one of the following criteria:
   - level of cleanness of product and/or product's packaging materials disposed of in step o);
   - level of readiness of product and/or product's packaging materials to be disposed of; and
wherein after step s), step t) is performed again.

In preferred embodiments of the first aspect of the invention, data d₀ related to said product comprise at least one or more data selected from the group consisting of the following:
- Global Trade Item Number of product;
- product title;
- product description;
- product code;
- unique identifier code of each product's unit;
- point of sale of product;
- product category and/or subcategory;
- product's Stock Keeping Unit;
- allergens included in product;
- ingredients included in product;
- country or countries where product is being commercialized;
- product packaging elements, including packaging type, material family, material substance;
- information about the presence or absence of a battery within product (50);
- one or more product certifications;
- one or more product accreditations;
- product documentation;
- country of origin of the product;
- information on whether the product is hazardous;
- information on whether the product is compostable;
- percentage of packaging recycled contained in the product;
- reusability degree of the product;
- recyclability degree of the product.

Yet in preferred embodiments of the first aspect of the present invention, said label comprises and/or is related to mandatory information and/or non-mandatory information, wherein the mandatory information is required by one or more legislation and comprises at least one of the following:
- a machine-readable code, for example, a QR-code, an RFID code;
- one or more logos, for example, the "Triman" logo;
- wording, for example, the word "Bouteille", meaning "Bottle" in French.

Yet in certain embodiments of the first aspect of the present invention, step a) of the computer-implemented method is carried out by at least one selected from the group consisting of: a first user via a first user interface of the first computational unit, and the first computational unit in an automated fashion, for example, by communicating automatically with the second computational unit whenever there is new information to update into second database of the second computational unit, wherein that information concerns said product and was inserted by a first user or retrieved by the first computational unit from a first database.

Yet in certain embodiments of the first aspect of the present invention, said product is one that falls within the scope of a legislation or regulation requiring that it must display a label comprising or giving access to mandatory information and/or said product is assigned non-mandatory information, which is also comprised in or accessed through said label; and said product and/or materials included therein can be recycled, preferably they can be recycled, and reused or refilled, and most preferably they can be recycled, reused or refilled and repurposed.

Yet in certain embodiments of the first aspect of the present invention, step g) of the method comprises the following substep:
g1) the first user interface displays an option for the first user to send said label to a printer.

Yet in certain embodiments of the first aspect of the present invention, the mandatory and the non-mandatory information are related to at least one of the group consisting of: information about disposal of the materials included in product after consumption thereof, information about handing-over the materials included in product and/or said product itself for a next life thereof, information about the carbon footprint of the product, information about ingredients, allergens or about any other content of the product. The information included in a machine-readable code in the product's label comprise a unique batch number associated to that specific unit of said product.

Yet in preferred embodiments of the first aspect of the present invention, the first user is selected from the group consisting of an importer of a product in a country wherein there's legislation to be complied with, a selling retailer of said product, an exporter of said product to their subsidiary established in a country wherein there's legislation to be complied with, a manufacturer of said product or of parts thereof, including its packaging, and any combination of these; and the second user is selected from the group consisting of a potential customer, a customer, a regulator/authority representative or inspector, and a consumer of a product, either in its first life or in its next life(s).

In preferred embodiments of a second aspect, the present invention refers to a system configured to implement the computer-implemented method of the first aspect which system comprises:
- a first computational unit comprising a first database and a first communication module; which first computational unit preferably belongs to or it's managed by the first user;
- a second computational unit comprising a second database and a second communication module;
- a first user interface associated to the first computational unit;
- one or more remote data sources, wherein the one or more remote data sources are accessed remotely, by the second computational unit;
- a printer, configured to receive commands from a computational unit, for example, from the first computational unit to print a label;
- a third computational unit, for example, a smartphone or a tablet of a second user, comprising a second user interface and a communication module;
- one or more reading and displaying devices comprising reading means and a wired or wireless communication module;
wherein
the first database is configured to store data inserted by a first user or to be displayed to a first user;
the first communication module is configured to communicate in a wired or wireless way with the second computational unit, via its second communication module;
the second database is configured to store information comprising data received from the first computational unit, data resulting from processing, and data to be displayed to a first user;
the first user interface is configured to receive data inserted by a first user and to display data or information to a first user; and
wherein
the second user interface is configured to receive data inserted by a second user and to display data or information to a second user; and
the third computational unit, for example, a smartphone of a second user, is configured to send information to the second computational unit and receive information therefrom.

In preferred embodiments of the second aspect of the present invention, the system additionally comprises:
- a recycle centre, comprising a machine-readable code reader; and
- a fourth computational unit comprising a third user interface;

wherein the recycle centre receives a product and/or product's packaging material disposed of by a second user;
the machine-readable code reader is configured to read a label; and
the fourth computational unit is configured to send information in a wired or wireless way to the second computational unit.

In preferred embodiments of the second aspect of the present invention, the first computational unit, the third computational unit, and the fourth computational unit are selected from the group consisting of a laptop computer, a desktop computer, a smartphone, a tablet, and the like, and the second computational unit is selected from the group consisting of a laptop computer, a desktop computer, a server and the like.

In preferred embodiments of the second aspect of the present invention, the one or more disposal receptacles are selected from the group consisting of a recycle bin, a packaging collecting device, and a combination of these; and the one or more next-life receptacles are selected from the group consisting of a to-reuse collecting container, a container providing a certain quantity of a subproduct for a refill operation of a product's packaging, like shampoo, shower gel, detergent, cereals, nuts, flour, sugar, or any other subproduct that is able to be supplied in a continuous manner, a second-hand shop, an automobile maintenance garage, a household apparatuses repair store, and a combination thereof.

In preferred embodiments of the second aspect of the present invention, the one or more reading and displaying devices is selected from the group consisting of a QR-code reader, a barcode scanner, a scanner in a point-of-sale system, an industrial scanner, an embedded system comprising a photo camera, a combination of any of these and the like. Some examples of code readers according to the invention that are available in the market and could be configured for reading and possibly communicating the data related to a label on a product and/or on a product's packaging according to the invention are the HENEX HC-3208R Wireless Barcode Scanner, the RETSOL LS 450 Laser Barcode Scanner, Shreyans 1D 2D QR Hands-Free Desktop Barcode Scanner, among others.

In preferred embodiments of a third aspect, the present invention refers to a computer program product comprising a first set of sequential and logical instructions which, when executed by a computer, for example, the second computational unit of the system according to the second aspect of the present invention, causes the computer to carry out steps b) and b0) of the method of the first aspect of the invention.

In preferred embodiments of a fourth aspect, the present invention refers to a computer program product comprising a second set of sequential and logical instructions which, when executed by a computer, for example, the second computational unit of the system according to the second aspect of the present invention, causes the computer to carry out steps e), f), and m) of the method of the first aspect of the invention.

In preferred embodiments of a fifth aspect, the present invention refers to a computer program product comprising a computer program application which, when executed by a computer, for example, the third computational unit of the system according to the second aspect of the present invention, causes the computer to carry out the steps k), and l) of the method of the first aspect of the invention.

In preferred embodiments of a sixth aspect, the present invention refers to a computer program product comprising a third set of sequential and logical instructions which, when executed by a computer, for example, the second computational unit of the system according to the second aspect of the present invention, causes the computer to carry out step s) of the method of the first aspect of the invention.

In preferred embodiments of a seventh aspect, the present invention refers to a computer-readable storage medium comprising the installation of a computer program product of any one the third, fourth, fifth or sixth aspect of the invention.

### DETAILED DESCRIPTION OF THE FIGURES

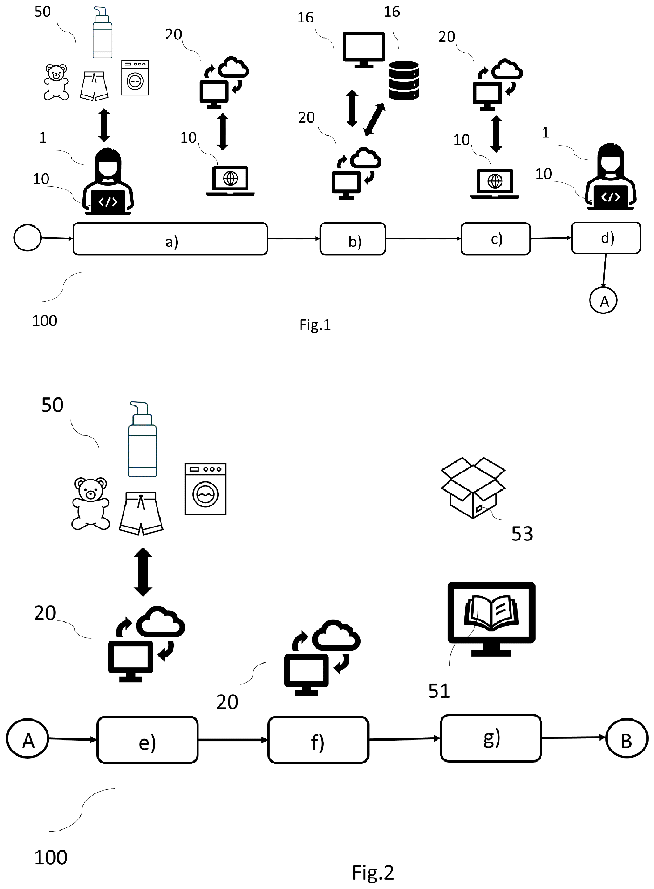

**Figure 1** schematically represents an embodiment of steps a), b), c) and d) of the computer-implemented method and related parts of the system according to the present invention. In step a) a first user (1) introduces, via a first user interface of a first computational unit (10), data d₀ related to a product (50). A second computational unit (20) receives such data d₀, and stores it in a second database (24) (not shown) of the second computational unit (20). The communication between the first computational unit (10) and the second computational unit (20) is carried out in a wired or a wireless way via for example the Internet. In step b), if data d₀ is not complete, the second computational unit (20) executes a first set of sequential and logical instructions trained model, which is trained to retrieve the missing data d₀ from remote data sources (16). Examples of such remote data sources (16) are Amazon, eBay, or the like. These sources are able to provide information that is common knowledge about a certain product, for example, when a sufficient data dₛ related to that product is provided. A sufficient data dₛ can be a GTIN (Global Trade Item Number), from which those remote data sources (16) are able to provide the remaining data needed to complete data d₀ of product (50). Data d₀ can also be completed manually by the first user (1). However, when this doesn't happen and the first user (1) inserts only sufficient data dₛ, there is a step b0) within which the trained model is trained to find the best remote source data sources (16) from which the system retrieves data d₀, has said. In this case, within step b0), the second computational unit (20) performs a search on those remote data sources (16) for data d₀ related to product (50), performs data cleaning, data weighting, data ranking and also it rates data comparison and accuracy of the input data. The output of the trained model according to the invention is the delivery of a ranking of remote data sources (16) for the provision of data d₀ for a certain product (50). In this way, for each product (50) registered in the second computational unit (20) by a first user (1), according to the present invention, there is a preferred remote data source (16) that is more reliable in providing data d₀ for a product (50). Examples of data d₀ are the following:
- Global Trade Item Number of product (50);
- product (50) title;
- product (50) description;
- product (50) code;
- unique identifier code of each product (50)'s unit, wherein this code is always present in order to identify the unique product (50) article;
- point of sale of product (50);
- product (50) category and/or subcategory;
- product (50)'s Stock Keeping Unit;
- allergens included in product (50);
- ingredients included in product (50);
- country or countries where product (50) is being commercialized;
- product (50) packaging elements, including packaging type, material family, material substance;
- information about the presence or absence of a battery within product (50);
- one or more product (50) certifications;
- one or more product (50) accreditations;
- product (50) documentation;
- country of origin of product (50);
- information on whether product (50) is hazardous;
- information on whether product (50) is compostable;
- percentage of packaging recycled contained in product (50);
- reusability degree of product (50);
- recyclability degree of product (50).

Step b0) can be performed before and/or during step b).

In step c) the second computational unit (20) sends to the first computational unit (10) all data d₀ collected and creates a request for confirmation whether data d₀ is correct. This request for confirmation is displayed on the first user interface (11) (not shown) on first computational unit (10) for the first user (1) to confirm, correct, and or validate data d₀.

In step d), first user (1) confirms, corrects and/or validates data d₀ related to product (50) for which first user (1) is responsible to comply with legislation and/or first user (1) wishes to provide extra information, non-mandatory information, to their consumers.

**Figure 2** schematically represents an embodiment of steps e), f), and g) of the computer-implemented method and related elements of the system according to the present invention. In step e), after data d₀ relative to product (50) is confirmed as complete, second computational unit (20) runs a second set of sequential and logical instructions able to retrieve from second database (24) (not shown) the mandatory information applicable to that particular product (50), for example, a bottle of wine, a skin cream, a package of nuts, wherein that mandatory information can be rules from any applicable regulation in the country or countries where product (50) is or will be placed, articles from law directives or any other regional requirements that may be applicable by law. Also in this step e) the second computational unit (20), by running said second set of sequential and logical instructions, retrieves any non-mandatory information recorded in the second database (24) (not shown) that has been added by the first user (1) when inserting data d₀ related to product (50), wherein said non-mandatory information can be a carbon footprint story of the product, information about the production process not using abusive workforce, environmental care taken by the manufacturer and so on. Having collected all the information, either mandatory and/or non-mandatory to be provided for that specific product (50) and in the specific country or countries wherein it is or it will be placed, the second computational unit, in step f), creates, still by means of the second set of sequential and logical instructions, a digital asset (51) (not shown). This digital asset (51) contains information related to product (50) from which a label will be created, which label is to be printed on product (50) and/or on a product (50)'s packaging materials.

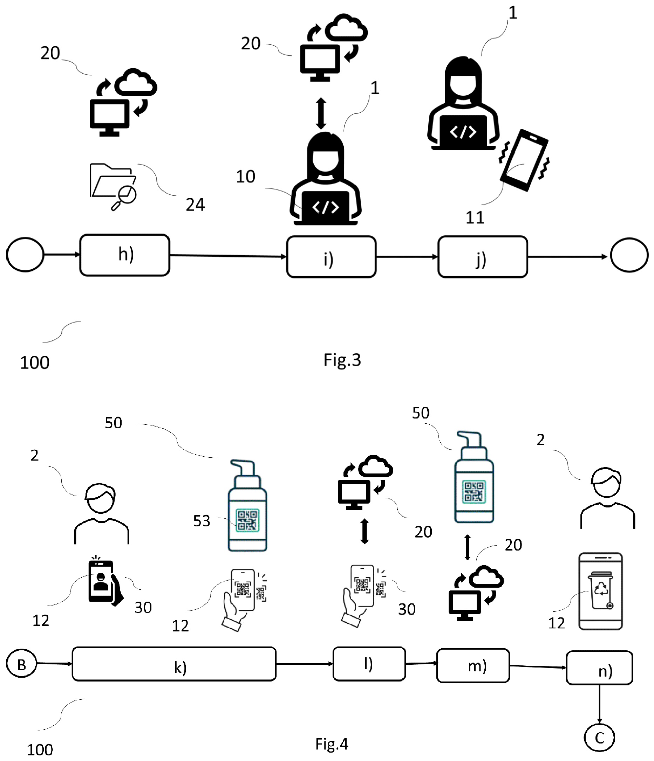

Next, in step g), digital asset (51) is displayed on the first user interface (11), such that it is possible to download it as a label (53) able to be printed on a product (50) and/or on a product (50)'s packaging material. After step g) is complete, the computer-implemented method (100) according to the invention can go on directly to step k) or it can proceed to steps h), i) and j). These steps h), i) and j) are represented in Figure 3 and can be carried out in parallel, that is, simultaneously with any other step of the method (100), or can these steps h), i), j), be performed before or after any other step of method (100).

Referring now to **Figure 3**, which schematically represents an embodiment of steps h), i), and j) of the computer-implemented method and related elements of the system according to the present invention, in step h), the second database (24) of the second computational unit (20) is updated by experts on each country's applicable law and regulations, such that at all relevant mandatory information related to product (50) placed in a certain country is updated at all times. Although in Figure 2, a sequence of steps is shown wherein there's an arrow pointing to a connection element B connecting the flowchart of Figure 2 to the one of Figure 4, as said, said sequence of steps could also follow step g), since steps h), i) and j) are independent from the other steps of the present computer-implemented method.

When the second computational unit (20) processes the updated information inserted by said experts, the second computational unit (20) sends in step i), via a second communication module (23) (not shown), an alert message to a first communication module (13) (not shown) of the first computational unit (10) on the updated information. Next, in step j), the first computational unit (10) sends a notification to the first user (1) which notification is shown in a first user interface (11), either on a computer screen or on a smartphone screen as it is represented in Figure 3.

**Figure 4** schematically represents an embodiment of steps k), l), m) and n) of the computer-implemented method and related elements of the system according to the present invention, wherein these steps represent another phase of the computer-implemented method of the invention. In this phase, a second user (2) will benefit from the information provided by the second computational unit (20) ensuring that this information, either the mandatory one and/or the non-mandatory. In step k), a second user (2) creates a request of information about a certain product (50), for example, a skin cream. For example, a second user left parenthesis to write parenthesis is at a supermarket in front of a shelf, and he or she wishes to buy a skin cream. In order to check whether that skin cream ace compatible with his/her skin problems he or she takes the skin cream out of the shelf and with his or her smartphone he scans the QR-code printed on the bottle of the skin cream. By doing so, the smartphone, or the third computational unit (30), opens a mobile app, or a computer application program, enabling him/her to see the information requested about the allergens content of that skin cream. Then second user (2) is able to decide to buy the skin cream and consume it.

Another type of a second user (2) can be a consumer who just finished that same skin cream, for example. This other type of second user (2) will scan the QR-code printed on the bottle of the skin cream with his or her smartphone. By doing so, this second user (2) can be informed, via the second user interface (12), on how to dispose of the bottle, for example, a plastic bottle. As represented in Figure 4, step k) includes a way to request information about a specific product (50). Another way to do this can be, in case second user (2) is an inspector from an authority, he/she can check, by comparing the logos printed on the product (50) and/or on product (50) packaging whether the recycling logos mandatory by law in the country concerned are correctly printed. In case product (50) isn't large enough to accommodate all logos and/or other information about how to dispose of the packaging materials, second user (2) inspector scans with his/her third computational unit (30), or smartphone, a machine-readable code, for example, a QR-code or an RFID code, which will create a display of mandatory information on the second user interface (12), for example, the screen of the smartphone, based on which the second user (2) inspector can decide whether the information displayed is complying or not with the law.

Finally, there are two main ways through which a second user (2) can access the information on a label (53): one, described in substep k1) is by scanning directly the machine readable code on the label (53), in case it bears one, which scanning will open automatically the computer application program on the third computational unit (30) and consequently all information is reachable; another one is described in substep k2): first, the second user (2) opens that computer application program on the third computational unit (30), or the mobile App on a smartphone, and then there are two alternatives, the first one is described in substep k21): the second user (2) scans then the machine-readable code, for example, a QR-code, and then it follows as explained above in substep k1), or second user (2) searches product (50), when product (50) has no machine readable code or when second user doesn't have means to scan machine readable codes, for example, on a laptop of second user (2), and then he/she taps a command to send a request to the second computational unit (20) for information about that product (50). This request is typically sent via the Internet and it can be done in a wired or wireless way, in step l).

In step m), the second computational unit (20) by executing the second set of sequential and logical instructions, identifies and retrieves the information requested in the previous step, through a matching between the information request related to product (50), and all the information available in the second database (24) connected to that product (50).

In the next step n), the second computational unit (20) provides all information retrieved and identified in the previous step to the third computational unit (30) which displays it on the second user interface (12). This information displayed may contain, for example, information on how to dispose of the product (50) materials, information about allergens and nutrition of product (50), information on how to forward product (50) to a next life. As said above, this can comprise mandatory and/or non-mandatory information. Based on the information displayed on second user interface (12), second user (2) can take an action.

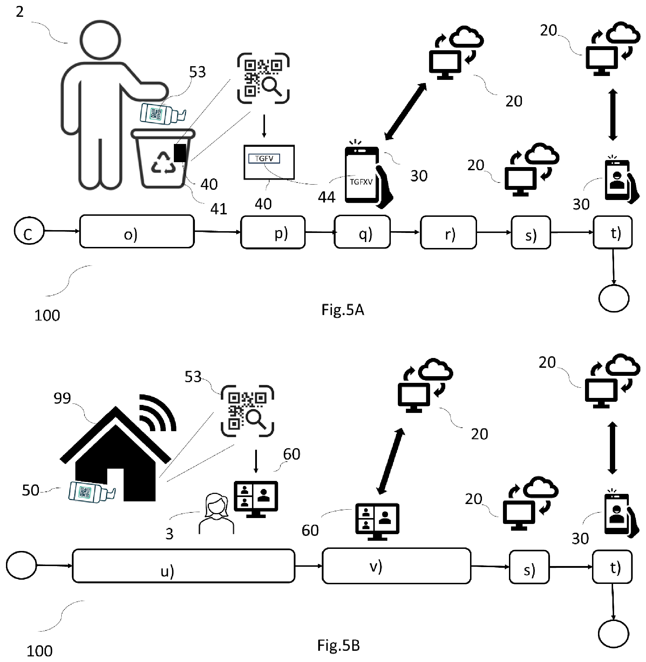

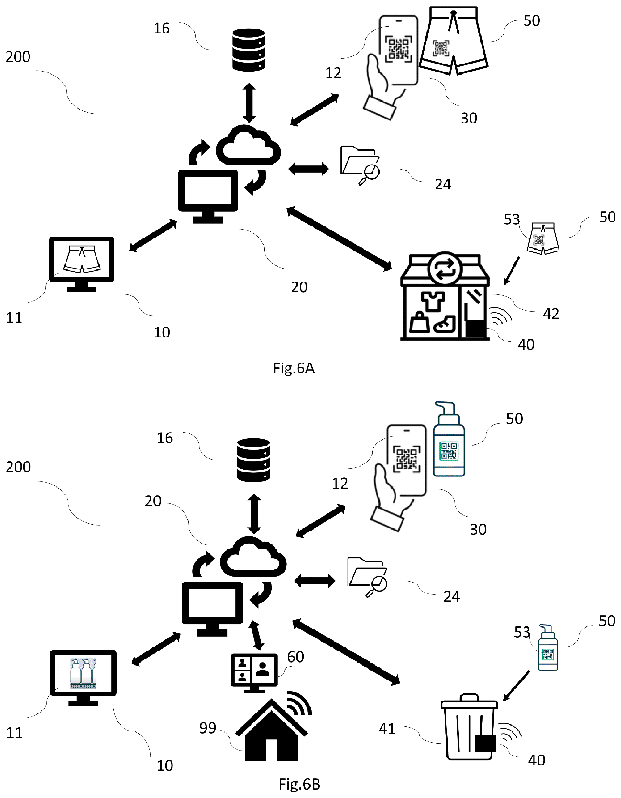

An exemplificative action taken by second user (2) is represented in **Figure 5A**, in step o). The action represented in Figure 5A is exemplificative and is one of the several actions second user (2) may take within the scope of the present invention. In the case represented, second user (2) is disposing of a product (50) material in a disposal receptacle (41) represented as a recycle bin. For example, product (50) is an electronic device bearing a QR-code on its label (53) with information on how to dispose of it in the end of a first or a subsequent life. The disposal receptacle (41) comprises a reading and displaying device (40) able to read the QR-code of product (50) being disposed. Second user (2) can also take a different action, not represented in Figure 5A, which action can be one or more of the following: second user (2) decides to buy the product (50), second user (2) decides to consume the product (50) because it is harmless to second user's health, second user (2) correctly or incorrectly hands-over product (50) and/or product (50) packaging materials into one or more next-life receptacles (42) as represented in Figure 6A, after consumption of the first life of product (50), second user (2) decides the product (50) is providing one or more mandatory information applicable thereto and thus second user (2) is not starting a notification of non-compliance to a first user (1) responsible for the information provided on, or accessed via, label (53), second user (2) decides the product (50) is not providing one or more mandatory information applicable thereto and thus second user (2) may start a notification or warning of non-compliance to a first user (1) responsible for the information provided on, or accessed via, label (53).

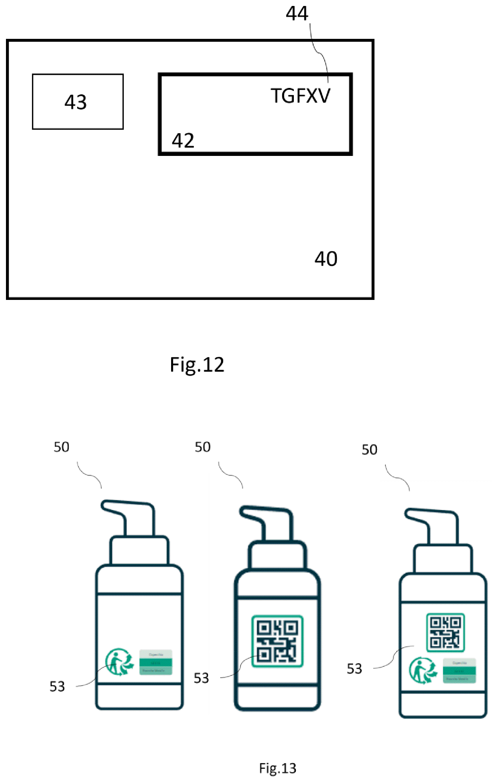

In step p), the reading and communication device (40), which is included in the disposal receptacle (41) as shown in Figure 5A, reads the information on label (53) of product (50) or packaging materials thereof. The reading and displaying device (40) can be an embedded system comprising a two dimensional barcode scanner, a QR-code reader, an RFID (RadioFrequency Identification) reader, like a barcode scanner, a point-of-sale system which can be wirelessly or in a wired way connected to the Internet, an industrial scanner also possibly wirelessly or in a wired way connected to the Internet, an embedded system comprising a photo camera, a combination of any of these and the like. The reading and displaying device (40) can be a conventional scan reader or photo camera with displaying features, that is, with a screen (43) configured to display a unique confirmation code (44). When the second user (2) disposes of the product (50) or product (50)'s packaging materials and label (53) is read by the reading and displaying device (40), the reading and displaying device (40) displays a unique confirmation code (44) on a related screen (43), as better shown in Figure 12. Said unique confirmation code (44) relates uniquely to that product (50) unit and also it relates uniquely to the disposal receptacle (41) or next-life receptacle (42) (not shown) which comprises it.

Still referring to Figure 5A, after second user (2) obtains the unique confirmation code (44) on the screen (43) of the reading and displaying device (40), in step q), second user (2) inserts said unique confirmation code (44) in second user interface (12), having the computer program application open on the third computational unit (30), for example, the smartphone of second user (2).

Next, in step r) of the method according to the present invention, the third computational unit (30) communicates with the second computational unit (20) to send the unique confirmation code (44) related to product (50) or product (50)'s packaging materials. This communication can be done, for example, via the Internet and it can be done in a wired or in a wireless way as a skilled person in the art can appreciate.

The second computational unit (20), in step s), via a third set of sequential and logical instructions, determines a score for the disposal action or the handing over action from second user (2). This determination is based on one or more criteria selected from the group consisting of the correctness or incorrectness of the action performed by second user (2) in terms of type of disposal receptacle (41) or next-life receptacle (42) into which second user (2) disposed of product (50), a distance between the point of sale of that specific product (50) and the disposal or handing over to next life location. Such distance is ideally the shortest possible, or at least one that is not bringing a higher carbon footprint to the product (50). This distance can be determined by means of conventional geolocation means (not shown) that could be given via the IP address of the fourth computational unit (60), and/or via geocoordinates associated to the reading and displaying devices (40) at the disposal receptacles (41) and/or at the next life handing-over receptacles (42) according to the present invention. These criteria aim to help ranking the personal carbon footprint of second user (2), who in this way can be stimulated on being more environmentally friendly when he or she sees his or her scores increasing in terms of contributing to a circular economy and a better planet. When the disposal wasn't the correct one for the disposal of product (50) or its packaging materials, the computer program application according to the invention, can create a pedagogic message to teach the second user (2) on how to correctly dispose of products and packaging materials and even a guidance to let the second user (2) correct his or her action, whenever possible.

In step t), the second computational unit (20) sends a feedback message, as schematically represented in Figure 5A, to the third computational unit (30), for example, second user (2)'s smartphone. Such feedback message may include, for example, a score on the personal carbon footprint of that specific second user (2). Or can the feedback message inform that this time product (50) wasn't well disposed of and informing how it should have been done.

However, when second user (2)'s action is neither related to dispose of product (50) or of product (50)' materials nor related to handing it over into one or more next-life receptacles (42), steps o), p), q), r), s) and t) of the computer-implemented method (100) of the present invention are not performed.

Figure 5B illustrates an embodiment of further steps of the computer-implemented method (100) according to the invention. In step u) illustrated in Figure 5B, a product (50)'s packaging material arrives at a recycle centre (99), which recycle centre (99) is not herein described in detail, since such a centre makes part of the prior art and thus it is known to a skilled person in the art. Upon arrival at the recycle centre (99), product (50)'s label (53) is scanned or read by means of a conventional machine-readable code scanner or reader and the information provided in or via means of the label (53) is communicated by wired or wireless communication means to a fourth computational unit (60) at the recycle centre. Immediately after this, a third user (3) at the recycle centre (99) assigns further criteria compliance level to the action of disposal of product (50)'s packaging by using a ranking on the disposal quality. For example, the product (50)'s packaging material was poor to be disposed of (in case it could have been reused, for example, or in case the material disposed of is too dirty and needs a cleaning operation before recycling, which will increase the carbon footprint) or average or good, in case third user (3) evaluates the product (50)'s packaging material was correctly disposed of and at the end of its last life, and so on. This ranking is inserted via a third user interface at the fourth computational unit (60). Next, in step v) of the method of the present invention, the fourth computational unit (60) sends the information read on label (53) to the second computational unit (20) for processing. The second computational unit (20) then performs step s) as described in relation to Figure 5A, wherein one or more of the following criteria are taken into account as well: level of cleanness of product (50) and/or product (50)'s packaging materials disposed of in step o); level of readiness of product (50) and/or product (50)'s packaging materials to be disposed of. At this stage, the personal carbon footprint of second user (2) is further determined and/or adjusted and step t) is once again performed, that is, a feedback message is sent to third computational unit (30) informing second user (2) on their updated personal carbon footprint. **Figure 6A** schematically illustrates an embodiment of the system (200) according to the invention. A first computational unit (10) communicates with a second computational unit (20) which on its turn communicates with a third computational unit (30). The first computational unit (10) belongs to a first user (1) (not shown) and comprises a first user interface (11), through which the first user (1) can insert data d₀ related to a product (50) the first user (1) is responsible for, in a market, for example, a country, concerned. The third computational unit (30) belongs to a second you user (2) (not shown) and comprises a second user interface (12). This second user interface (12) allows the second user (2) to use a computer program application according to the invention via which the second user (2) can obtain information, either mandatory or non-mandatory, about product (50) of his/her interest. The second computational unit (20) comprises a second database (24) and uses remote data sources (16) to collect and to use information provided there on related to product (50), in order to gather all data d₀ needed in order to issue label (53) for that specific product (50). In the embodiment shown in Figure 6A, product (50) is a short trousers. In the embodiment represented in Figure 6A, product (50) is being given a next life, wherein its second user (2) is delivering the short trousers to a next life receptacle (42), which in this example is a second-hand shop. In the next life receptacle (42) represented, there is a reading and displaying device (40) configure to scan label (53) of product (50), in this example, the short trousers, and to communicate with the second computational unit (20), sending the information behind the machine-readable code on label (53), for example, a QR-code, an RFID code. As explained above in relation to Figures 5A-5B, the second computational unit (20) sends a feedback message to the third computational unit (30), for example a smartphone of the second user (2), wherein such feedback message may contain a score on a personal carbon footprint of second user (2).

**Figure 6B** schematically represents another embodiment of the system (200) according to the invention. The embodiment represented in Figure 6B differs from that of Figure 6A only in that Figure 6B shows a disposal receptacle (41) comprising a reading and displaying device (40) receiving a packaging material of a product (50), in this example, a bottle of skin cream, to be recycled, instead of a next life receptacle (42) as shown in Figure 6A. Also in the embodiment of Figure 6B, the reading and displaying device (40) reads label (53) that product (50) bottle carries, after which it communicates with second computational unit (20) sending the data related to the product (50), in this case a skin cream empty bottle. Also on the first user interface (11), an assembly line of product (50) is being shown to represent data d₀ being requested to first user (1) to insert via the first user interface (11), in the first computational unit (10). In this Figure 6B, a recycle centre (99) is shown, as well as the fourth computational unit (60) at the recycle centre. This fourth computational unit (60) is configured to receive data read or scanned by an appropriate reader or scanner for machine-readable codes like a QR-code, an RFID code and so on, from label (53) of a disposed product (50) or packaging materials thereof. Fourth computational unit (60) is also configured to communicate by wired or wireless means, for example, via the Internet, with second computational unit (20) to send the data read or scanned above mention and also to send other data inserted by third user (3), related to rankings on the recyclability of product (50) or product (50)'s packaging materials disposed of. For the remaining components of the system (200) represented in Figure 6B, they are identical of those represented in Figure 6A and will not be described again as they were already discussed in relation to Figure 6A.

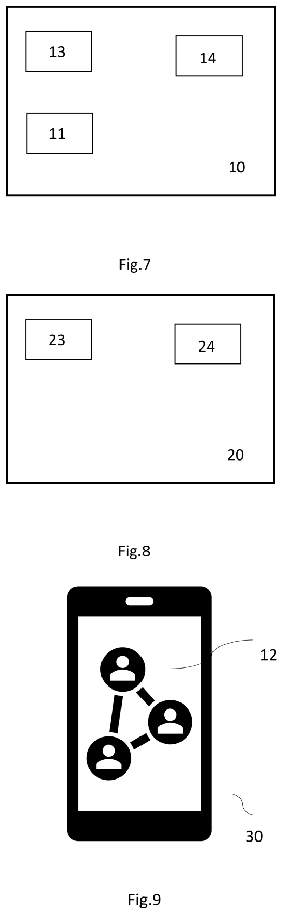

**Figure 7** schematically represents an embodiment of the first computational unit (10) of the system according to the present invention. The first computational unit (10) can be a computer, for example, a laptop or a desktop computer, or even a smartphone or a tablet, belonging to the first user (1), and by means of which the first user (1) inserts data d₀ related to a product (50) which placement in the market the first user (1) is responsible for. First user (1) can be a manufacturer, a retailer, an importer or an exporter, as mentioned hereinbefore. If the first user (1) is a manufacturer of a product (5) packed in a plastic bottle, and a law article applies in a country in which the manufacturer wishes to place the product (50), the first user (1) as the responsible entity to comply with such law article, needs to know, in a correct and totally up-to-date manner, what mandatory information in the form of signs and/or wording and/or codes, including machine-readable codes, such as QR-codes, must be placed on the product (50) or on the product (50)'s packaging materials or on both. To have access to that mandatory information, the first user (1) can access a platform provided by a second computational unit (20) according to the invention, which second computational unit (20) is connected to the first computational unit (10), for example, via the Internet in a wired or wireless manner, as it is schematically represented in Figure 6. The first computational unit (10) comprises a first user interface (11) by means of which the first user (1) can insert data d₀ related to product (50). As discussed above in relation to Figure 1, data d₀ can be one or more of a wide range of data, wherein the first user (1) might not wish to fill in all of it, in which case the first user (1) can opt for providing sufficient data dₛ, from which the computer-implemented method of the invention is able to retrieve the remaining data d₀. As also discussed above, in relation to Figure 1, data d₀ can be inserted partly, and later confirmed, or completely by first user (1) but this can also be done in an automatic way wherein the first computational unit (10) communicates with the second computational unit (20) to send data d₀ related to product (50). For the storage of such data d0, the first computational unit (10) comprises a first memory (14) and for the communication with the second computational unit (20), the first computational unit (10) comprises a first communication module (13).

**Figure 8** schematically represents an embodiment of the second computational unit (20) of the system according to the present invention. The second computational unit (20) can be a computer, for example, a laptop, a desktop computer, or a server. The second computational unit (20) comprises a second communication module (23) via which it communicates with the first computational unit (10), with a third computational unit (30), and with a reading and displaying device (40) already mentioned hereinbefore and discussed below in relation to Figures 9-12. The second computational unit (20) also comprises a second database (24), in which data and information, both mandatory and/or non-mandatory, related to product (50) are stored. The second computational unit (20) is configured to store and execute the algorithms of the present invention, that is, the first set of sequential and logical instructions, the second set of sequential and logical instructions, the third set of sequential and logical instructions, and the computer program application, which carry out the computer-implemented method (100), namely steps b) and b0) (first set of sequential and logical instructions), steps e), f), and m) (second set of sequential and logical instructions), steps k), and l) (computer program application ) and step r) (third set of sequential and logical instructions).

**Figure 9** schematically represents an embodiment of the third computational unit (30) of the system according to the present invention. The third computational unit (30) can be a laptop, a tablet or a smartphone, preferably the third computational unit (30) is a smartphone of second user (2). The third computational unit (30) comprises a second user interface (12) and also comprise a memory and communication means (not shown) as can be appreciated by a skilled person in the art and thus not further described. The third computational unit (30) is configured to store and execute a computer program application according to the invention, which can be downloaded via the Internet, in a wired or wireless manner. As already discussed, the third computational unit (30) is in the possession of a second user (2) when a second user (2) wishes to know information - either mandator or non-mandatory - related to a product (50) that second user (2) is interested in.

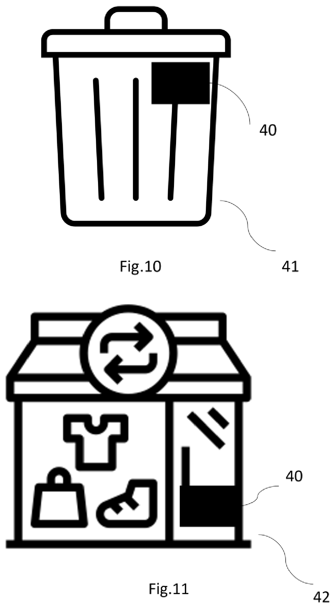

**Figure 10** schematically represents an embodiment of a disposal receptacle (41) of the system according to the present invention. This disposal receptacle (41) can be a recycle bin for plastic, for metal, for paper. Also disposal receptacle (41) can be a collecting point receptacle wherein users can drop an empty ink tin, bottle, or any other empty packaging material. The disposal receptacle (41), as shown in Figure 10, is equipped with a reading and displaying device (40), by means of which the product (50) materials being disposed and bearing a machine-readable code or another machine-readable sign within label (53), can be read.

**Figure 11** schematically represents an embodiment of a next life receptacle (42) of the system according to the present invention. This next life receptacle (42) can be a second-hand shop, a system installed in a supermarket through which an empty packaging of a product (50), for example, a shampoo, can be refilled, a car maintenance garage wherein used car parts can be delivered for a next life, and so forth. The next life receptacle (42), as shown in Figure 11, is equipped with a reading and displaying device (40), by means of which the product (50) and/or the product (50) packaging being handed-over to a next life and bearing a machine-readable code or another machine-readable sign within label (53), can be read.

**Figure 12** schematically represents an embodiment of a reading and displaying device (40) of the system according to the present invention. This device (40) comprises a screen (43) configured to display a unique confirmation code (44).

The reading and displaying device (40) comprises a machine-readable code, like a QR-code reader or scanner, and/or it comprises a photo camera able to recognize a sign or a logo on label (53), or even able to identify wording printed on label (53) of product (50) or its materials. Such a reading and displaying device (40) is installed within a disposal receptacle (41) or within a next life handing-over receptacle (42), respectively, when this product (50) or its materials are being disposed of or when they are being handed over to a next life, for example, in a second-hand shop, in a car maintenance garage and so forth.

**Figure 13** schematically represents an embodiment of a product (50) according to the present invention, wherein this product (50) is a skin cream on which bottle a label (53) is placed. Three different types of label (53) are shown in Figure 13. On the left-hand side, label (53) bears only a logo or a sign and wording, on the middle drawing, label (53) bears a QR-code and on the right-hand side label (53) bears both a sign or logo and wording and a QR-code. All three types of labels (53) are covered by the scope of the present invention.

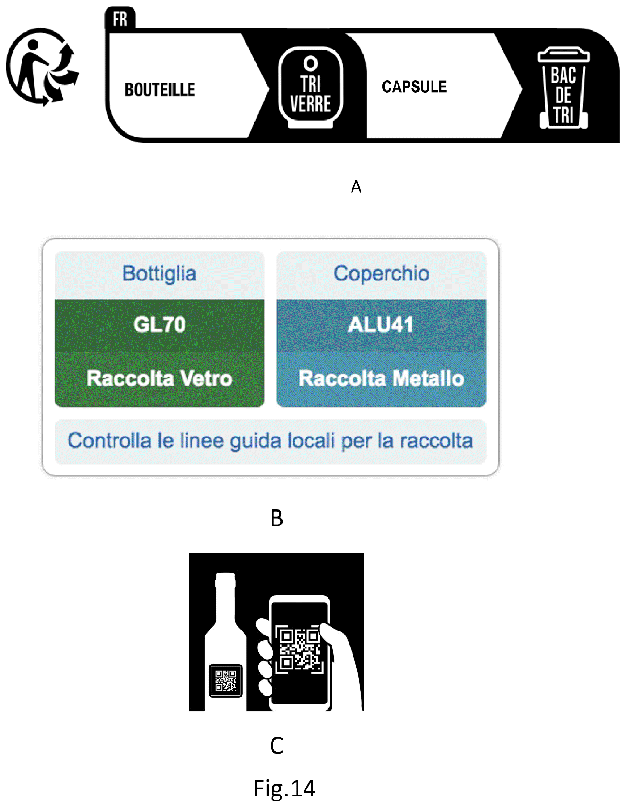

**Figure 14** schematically represents examples of a label created by the method and system according to the invention, wherein mandatory information is shown on the labels on Figure 14-A and B and non-mandatory information is being accessed via a QR-code placed on a bottle of wine on Figure 14-C, which QR-code can be scanned by a second user (2) in order to hear about the production story of that particular wine. This information can be updated by the wine producer, making the QR-code future proof. Figure 14-A and -B show two examples of label (53) with mandatory information to be put on a bottle of wine or beer in France (Figure 14-A) and in Italy (Figure 14-B).

### EXAMPLES

### Example 1

The following example intends to illustrate the first set of sequential and logical instructions trained model.

When first user (1) inserts data dₛ in the form of a GTIN Received or Sourced (from GS1 database), the first set of sequential and logical instructions will ensure that:
- Trusted Sites are examined, wherein determining trusted sites over time is obtained by the training of the model by creating a mini bespoke artificial intelligence (AI) tool, for initial data capture;
- Wider internet is scanned for new / external / other data sources (16).

In more detail, the first set of sequential and logical instructions can work on an imputed GTIN given by the first user (1), a bulk list of data, or can proactively source GTIN's from the GS1 database and proactively build data, by performing the following actions:
- data is compiled and saved to a local database (24);
- data is captured from external sources (16) and stored, providing a solid foundational start for data;
- new data / attributes are saved in a pending stage for examination and augmentation of taxonomy;
- this component will be important for the first few months of the product (50)'s development and iteration, it will lower in significance and need over time;
- bespoke AI is trained over time on data cleaning, scoring and weighting;
- natural language processing and existing libraries are leveraged;
- bespoke weighting and ranking algorithms are built over time on product (50). Some over simplified examples of what this entails are indicated below:
   Example 1.1: comparing eight data sources, six have colour 'Black' and two have colour 'White'. The first set of sequential and logical instructions will assume Black and check more sites to validate this selection.
   Example 1.2: the scoring outcome of data sources feeds the first set of sequential and logical instructions model for trusted data sources (16) ranking over time. The developer user interface / notifications for new data and/or abnormalities and/or false positives as to help train the model over time on becoming more accurate.

### Example 2

One example of the application of the computer-implemented method and system according to the invention is the application of Article 13 of French Law AGEC.

Article 13 is a component of France's circular economy law introduced in 2020 and imposes a range of obligations on those placing goods on the French market, for example, a manufacturer, a retailer, an importer. These obligations require these parties to make specific environmental information about the product and packaging available for consumers. Any seller trading products in France need to comply with this Article 13 law.

The computer-implemented method and system according to the invention provide a platform that outputs B2C (business-to-consumer) data in an easy to view online format via the first user interface (11) via QR codes driven by GS1 GTIN numbers.

For computer-implemented method and system according to the invention' s Article 13 solution, sellers input product data into the system, the second computational unit (20), in a question and answer format displayed on the first user interface (11), driven by the first and the second set of sequential and logical instructions of the invention, will offer further questions and finally output the necessary data to render Article 13 information online. The first set of sequential and logical instructions of the invention can save the first user (1) hours of research, by intuitively displaying only the correct relevant and required environmental questions for each product, based on specialised category/materials filtering. This process drastically reduces the chance of error and incorrect reports being created/produced by product owners and ensures up-to-date exact information is then displayed and converted into a label (53) to be placed on product (50) and/or its packaging materials.

The mandatory information related to Article 13 is constantly monitored by experts and it is permanently being updated in the database (24) of the second computational unit (20) of the invention.

Sellers or manufacturers do not need any knowledge of the Article 13 processes and criteria, only knowledge of their own product (50) to comply.

The first user interface (11) offers a clear user interface. Split into three parts information is presented to the user:
1. B2B (Business-to-Business) Selection of product type, packaging and product component elements
2. B2B (Business-to-Business) Additional questions relevant to the following categories:
   - Compostability
   - Incorporation of recycled material
   - Possibility of reuse
   - Recyclability
   - Presence of hazardous substances
   - Eco-modulation
3. B2C (Business-to-Consumer) Article 13 self-certification online information in French:
   When the user wishes to learn how to dispose/repurpose or recycle of the product, he/she scans the label on the product or product packaging with their smartphone, the computer program application will open on the screen and shows instructions on how to dispose/repurpose or recycle of that specific product. Then the user makes a selection as to the recycling; reuse, remanufacturer option they'd like to dispose of the product or its packaging. The screen on second user interface would then give them instruction to the nearest location (via map postcode, for example) along with details of the correct method of disposal.

### Example 3

The Italian legislative Decree No.116 is in force since September 2020. The law includes several provisions that are intended to promote the transition to a circular economy in the country. This is law on all products sold in Italy from 1st January 2023. Manufacturers must ensure their products meet Italian regulations (not unlike the French law above). For example, the product (50) must display in its label (53), in Italian language, the type of packaging, identification code and waste collection guidelines in the appropriate colour. This can be displayed digitally with an identifier (such as QR code, 2D barcode, barcode or another link to a web site containing the information) printed on pack. An example of a label (53) complying to this Italian law is shown in Figure 14-B. 3.

B2C (Business-to-Consumer) Italian legislative Decree No.116 online information in Italian:
When the user wishes to dispose of the product, he/she scans the label on the product or product packaging with their smartphone, the computer program application will open on the screen and shows instructions on how to dispose of that specific product. Then the user makes a selection as to the recycling; reuse, remanufacturer option they'd like to dispose of the product or its packaging. The screen on second user interface would then give them instruction to the nearest location (via map postcode, for example) along with details of the correct method of disposal.

### INDUSTRIAL APPLICATIONS

The computer-implemented method (100) and system (200) according to the invention can be applied to any product (50) that is to be placed in a market, or in a country, wherein legislation or a regulation applies and which legislation or regulation demand that such product (50) and/or its packaging bear a label (53) comprising mandatory information for that market or country, which mandatory information is destined to the customer or consumer of the product.

The computer-implemented method (100) and system (200) according to the invention can also be applied to any product (50) placed in a market, or in a country, wherein product (50) manufacturer or even retailer or importer wish to inform their customers on any further information that is typically non-mandatory, for example, information related to the footprint of that product or to the product (50) production processes or raw materials used.

The computer-implemented method (100) and system (200) according to the invention can be used and benefitted by a first user (1) and by a second user (2), which first user (1) and by a second user (2) are already characterized hereinbefore in this application.

The computer-implemented method (100) and system (200) according to the invention provide a circular economy for the lifetime of a product (50) or its packaging materials bearing a label (53).

It is apparent to persons skilled in the art that the present invention is not limited to the detail of the above exemplary embodiments, and the present invention can be realized in other concrete forms without deviating from the spirit or essential features of the present invention. Therefore, in any way, the embodiments should be regarded as exemplary, but not restrictive. The scope of the present invention is defined by the attached claims rather than by the above specification, so it is intended to encompass all variations falling within the meaning and scope of equivalent elements of the claims in the present invention. Any references in the claims shall not be deemed to limit the claims involved.

In addition, it should be understood that although the present specification is described in terms of embodiments, not each embodiment comprises only one independent technical solution. The specification is stated in this way only for the sake of clarity. Technical personnel skilled in the art should take the specification as a whole, and the technical solutions in various embodiments can also be combined properly to form other embodiments that can be understood by those skilled in the art.

### REFERENCE SIGNS LIST

- 1 -: first user
- 2 -: second user
- 3 -: third user
- 10 -: first computational unit
- 11 -: first user interface
- 12 -: second user interface
- 13 -: first communication module
- 14 -: first database
- 16 -: remote data sources
- 20 -: second computational unit
- 23 -: second communication module
- 24 -: second database
- 30 -: third computational unit
- 40 -: reading and displaying device
- 41 -: disposal receptacle
- 42 -: next life receptacle
- 43 -: screen
- 44 -: unique confirmation code
- 50 -: product
- 51 -: digital asset
- 53 -: label
- 60 -: fourth computational unit
- 99 -: recycle centre
- 100 -: method
- 200 -: system

### CITATIONS LIST

### PATENT LITERATURE

Patent Application WO 2018/089777 A2 published on 10 November 2016, by ECO Culture Manufacturing Corp (USA).

Patent N° US 11,625,691 B2, published on 11 April 2023, by Single Green Co. Ltd. (TW).

## Claims

1. A computer-implemented method (100) for generating a label (53) wherein the method (100) comprises the following steps:
a) reception of data d₀ originated in a first computational unit (10), by a second computational unit (20), wherein said data d₀ is related to a product (50), reception of any non-mandatory information related to product (50) and storage of data d₀ and of any non-mandatory information received in a second database (24) of the second computational unit (20);
b) if data d₀ is not complete, but comprises sufficient data dₛ, the second computational unit (20) executes a first set of sequential and logical instructions trained model, trained to retrieve the missing data d₀ from remote data sources (16), wherein the first set of sequential and logical instructions trained model uses input data related to the existent data d₀ of the product (50) identified by the sufficient data dₛ, and which output delivers the most adequate remote data source (16), wherefrom the first set of sequential and logical instructions trained model completes the missing data d₀ of product (50), wherein the training of the first set of sequential and logical instructions trained model is carried out in the following step b0):
b0) searching on the remote data sources (16) for data d₀ related to data dₛ of the product (50), performing data cleaning, data weighting, data ranking and iterates data comparison and accuracy, delivering as an output a ranking of the remote data sources (16) for providing data d₀ for the product (50);
c) the second computational unit (20) sends to the first computational unit (10) the complete data d₀ and requests for confirmation whether all data d₀ is correct;
d) confirmation is done by a first user (1) via a first user interface (11) of the first computational unit (10);
e) after confirmation is done or if data d₀ received in step a) is complete, the second computational unit (20) executes a second set of sequential and logical instructions which retrieves mandatory information according to legislation applicable to the product (50) from the second database (24) of the second computational unit (20), and retrieves any non-mandatory information registered in the second database (24) related to the product (50);
f) creation, by the second computational unit (20), through the second set of sequential and logical instructions, of a digital asset (51) in an electronic format, wherein such digital asset (51) is related to the product (50);
g) display of the digital asset (51) on the first user interface (11), wherein the digital asset (51) is configured for the first user (1) to download it as a label (53) in a digital format;
wherein step b0) occurs before and/or during step b).

2. The computer-implemented method (100) according to claim 1, **characterized in that** the sufficient data dₛ is a Global Trade Item Number of the product (50).

3. The computer-implemented method (100) according to any one of the preceding claims, **characterized in that** data d₀ related to the product (50) comprise at least one or more data selected from the group consisting of the following:
- Global Trade Item Number of the product (50);
- product (50) title;
- product (50) description;
- product (50) code;
- unique identifier code of each product (50)'s unit;
- point of sale of the product (50);
- product (50) category and/or subcategory;
- product (50)'s Stock Keeping Unit;
- allergens included in the product (50);
- ingredients included in the product (50);
- country or countries where the product (50) is being commercialized;
- product (50) packaging elements, including packaging type, material family, material substance;
- information about the presence or absence of a battery within product (50);
- one or more product (50) certifications;
- one or more product (50) accreditations;
- product (50) documentation;
- country of origin of the product (50);
- information on whether the product (50) is hazardous;
- information on whether the product (50) is compostable;
- percentage of packaging recycled contained in the product (50);
- reusability degree of the product (50);
- recyclability degree of the product (50).

4. The computer-implemented method (100) according to any one of the preceding claims, **characterized in that** the label (53) comprises and/or is related to mandatory information and/or non-mandatory information, wherein the mandatory information is required by one or more legislation and comprises at least one of the following:
- a machine-readable code;
- one or more logos;
- wording.

5. The computer-implemented method (100) according to any one of the preceding claims, **characterized in that** the product (50) falls within the scope of a legislation requiring that it must display a label (53) comprising or giving access to mandatory information and/or the product (50) is assigned non-mandatory information, which is also comprised in or accessed through the label (53); and
**in that** product (50) and/or materials included in product (50) can be recycled, preferably recycled, and reused or refilled, and most preferably recycled, reused or refilled and repurposed.

6. The computer-implemented method (100) according to any one of the preceding claims, **characterized in that** step g) comprises the following substep:
g1) the first user interface (11) displays an option for the first user (1) to send the label (53) to a printer.

7. The computer-implemented method (100) according to any one of the preceding claims, **characterized in that** the mandatory and the non-mandatory information are related to at least one of the group consisting of: information about disposal of the materials included in the product (50) after consumption thereof, information about handing-over the materials included in the product (50) and/or the product (50) itself for a next life thereof, information about the carbon footprint of the product (50), information about ingredients, allergens or other content of the product (50).

8. The computer-implemented method (100) according to any one of the preceding claims, **characterized in that** the first user (1) is selected from the group consisting of an importer of a product (50) in a country wherein there's legislation to be complied with, a selling retailer of a product (50), an exporter of product (50) to their subsidiary established in a country wherein there's legislation to be complied with, a manufacturer of the product (50) or of parts thereof, and any combination of these.

9. The computer-implemented method (100) according to any one of the preceding claims, **characterized in that** the method further comprises the following steps:
h) updating of the second database (24), by experts, of the second computational unit (20) with new mandatory information related to the product (50);
i) sending, by the second computational unit (20), of an alert message to the first computational unit (10) prompting to notify the first user (1) of the updated mandatory information;
j) sending of a notification to the first user (1), via first user interface (11), by the first computational unit (10) whenever there's the need of data d₀ to be completed, amended and/or validated by the first user (1);
wherein steps h) through j) occur in parallel with, before or after, any other steps of the method.

10. The computer-implemented method (100) according to any one of claims 1-8, **characterized in that** the method further comprises the following steps:
k) creating an information request over the product (50), by a second user (2), wherein said creation is carried out by at least one of the following:
k1) scanning of a machine-readable code on the label (53) of the product (50),
by using a third computational unit (30);
k2) opening, by the second user (2), of a computer program application on a second user interface (12) in the third computational unit (30), and:
k21) scanning, by the second user (2) with the third computational unit (30), of a machine-readable code on the label (53) of the product (50); or
k22) search the product (50) on the computer program application and tap a sending command on the second user's interface (12);
l) sending of the information request created in step k) and related to the product (50), by the third computational unit (30), to the second computational unit (20);
m) processing of the information related to the product (50), by the second computational unit (20) which executes the second set of sequential and logical instructions, wherein said processing includes the identification and retrieval of the information requested;
n) providing, by the second computational unit (20), the information requested concerning the product (50) chosen by the second user (2), to the third computational unit (30) which on its turn displays the information on the second user interface (12).

11. The computer-implemented method (100) according to claim 10, **characterized in that** the method further comprises the following steps:
o) the second user (2) takes an action based on the information received on the second user interface (12) related to the product (50); wherein such action is one or more of the following:
- the second user (2) decides to buy the product (50);
- the second user (2) decides to consume the product (50) because it is harmless to the second user's health;
- the second user (2) correctly or incorrectly disposes of the materials comprised in the product (50) in one or more disposal receptacles (41) after consumption thereof;
- the second user (2) correctly or incorrectly hands-over the product (50) and/or the product (50) packaging materials into one or more next-life bins (42), after consumption of the first life of product (50);
- the second user (2) decides the product (50) is providing one or more mandatory information applicable thereto;
- the second user (2) decides the product (50) is not providing one or more mandatory information applicable thereto;
p) when the second user (2)'s action is to dispose of the product (50) materials or to hand-over the product (50) and/or the product (50) packaging materials, one or more reading and displaying devices (40) included in one or more disposal receptacles (41) or in one or more next-life receptacles (42), read one or more labels (53) and delivers a unique confirmation code (44) on a device screen (43), wherein the unique confirmation code (44) relates uniquely to that product (50) unit and also it relates uniquely to the disposal receptacle (41) or next-life receptacle (42) which comprises it;
q) the second user (2) then inserts the unique confirmation code (44) into the computer program application on the second user interface (12) of the third computational unit (30);
r) the third computational unit (30) sends the unique confirmation code (44) to the second computational unit (20);
s) the second computational unit (20) executes a third set of sequential and logical instructions to determine a score for the action of disposal and/or the action of handing-over product (50) performed by second user (2); wherein said score determination includes processing carbon footprint data of the product (50) supplied by the first user (1) and at least one of the following criteria:
- the correctness or incorrectness of the action performed by the second user (2) in terms of type of disposal receptacle (41) or next-life receptacle (42) into which the second user (2) disposed of the product (50);
- a distance between the point of sale of that specific product (50) and the disposal or handing over to next life location;
t) the second computational unit (20) sends to the third computational unit (30) a feedback message informing the second user (2) about the score on their personal carbon footprint determined in the previous step.

12. A system (200) configured to implement the computer-implemented method (100) as defined in any one of claims 1-9, **characterized in that** it comprises:
- a first computational unit (10) comprising a first database (14) and a first communication module (13);
- a second computational unit (20) comprising a second database (24) and a second communication module (23);
- a first user interface (11) associated to the first computational unit (10);
- one or more remote data sources (16), wherein the one or more remote data sources (16) are accessed remotely, by the second computational unit (20);
- a printer, configured to receive commands from the first computational unit (10) to print a label (53);
wherein
the first database (14) is configured to store data inserted by the first user (1) or to be displayed to the first user (1);
the first communication module (13) is configured to communicate in a wired or wireless way with the second computational unit (20), via its second communication module (23);
the second database (24) is configured to store information comprising the data received from the first computational unit (10) and the data resulting from processing, and data to be displayed to a first user (1);
the first user interface (11) is configured to receive data inserted by the first user (1) and to display data or information to the first user (1).

13. A computer program product wherein it comprises a first set of sequential and logical instructions and a second set of sequential and logical instructions which, when executed by a computer, cause the computer to carry out the steps b), b0), e), f), and m), of the method as defined in claims 1 to 10.

14. A computer-readable storage medium **characterized in that** it comprises the installation of a computer program product as defined in claim 13.
